# EUROPÄISCHE PATENTSCHRIFT

(11) **EP 2 702 892 B1**
(45) Veröffentlichungstag und Bekanntmachung des Hinweises auf die Patenterteilung: **24.08.2016**
(21) Anmeldenummer: 13194484.5
(22) Anmeldetag: 30.08.2011
(51) Int. Cl.: A45C 15/06, A45D 42/10

(54) **Beleuchtungseinrichtung**
Illuminating device
Dispositif d'éclairage

(30) Priorität: 03.09.2010 DE 102010044320
(43) Veröffentlichungstag der Anmeldung: 05.03.2014
(62) Teilanmeldung aus: 11755008.7
(73) Patentinhaber: Schrims GmbH, 61169 Friedberg (DE)
(72) Erfinder: Schech, Christian, 64732 Bad König (DE); Wetzel, Bastian, 50126 Bergheim (DE)
(74) Vertreter: Metten, Karl-Heinz

(56) Entgegenhaltungen:
- DE-A1- 4 302 317
- DE-A1-102008 026 571
- DE-U1- 9 114 298
- US-A- 5 424 926
- US-A1- 2004 188 590
- US-A1- 2005 078 481
- US-A1- 2006 007 674
- US-A1- 2006 203 473

## Beschreibung

Die Erfindung betrifft eine Beleuchtungseinrichtgung, die auch bei ihrem Transport in Betrieb nehmbar ist und in einem öffenbaren und wieder verschließbaren Gegenstand angeordnet ist, mit mindestens einer ersten Lichtquelle, einem elektrischen Energiespeicher und einer Schaltervorrichtung, die eine eine Sensoreinheit umfassende Steuereinheit aufweist, mit der bei Berühren eines ersten Sensormittels der Sensoreinheit oder bei Erfassen einer Annäherung eines Benutzers durch ein erstes Sensormittel, eine erste Schalteinheit von einem offenen Schaltzustand in einen geschlossenen Schaltzustand überführbar ist oder überführt wird, in welchem die erste Lichtquelle durch den elektrischen Energiespeicher mit elektrischer Energie versorgbar ist oder versorgt wird.

Eine nicht gattungsgemäße Beleuchtungseinrichtung ist bekannt aus DE 20 2007 011 357 U1, bei der die Beleuchtungseinrichtung in einem nicht öffenbaren Gegenstand angeordnet ist. Die Lichtquelle wird durch eine Bewegung oder durch ein Berühren aktiviert. Hierbei hat es sich als nachteilig herausgestellt, dass die Beleuchtungseinrichtung, wenn sie beispielsweise in einer Handtasche angeordnet ist, ungewollt durch sich in der Tasche befindliche Gegenstände aktiviert werden kann, was zu einem schnellen Entladen des Energiespeichers führt.

Darüber hinaus sind nicht gattungsgemäße Beleuchtungseinrichtungen, beispielsweise für tragbare Schminkspiegel, bekannt, bei denen eine Lichtquelle aktiviert wird, wenn der öffenbare und wieder verschließbare Gegenstand geöffnet wird. Hierbei hat es sich als störend erwiesen, dass der Gegenstand, wenn es sich beispielsweise in einer Damenhandtasche befindet, oft erst nach langer Suche auffindbar ist.

Die US 2005/0078481 A1 behandelt eine transportable Beleuchtungseinrichtung, welche in der Lage ist, Gegenstände, die auf oder in der Nähe der Beleuchtungseinrichtung gelagert werden, zu beleuchten, und mit der diese Gegenstände, in dunkler Umgebung, aufgefunden werden können.

Die US 2004/0188590 A1 beschreibt eine Beleuchtungseinrichtung zum Auffinden von mit ihr verbundenen Objekten. Hierfür ist vorgesehen, die Beleuchtungseinrichtung über einen Verbindungsring mit einem Objekt, wie z.B. einem Schlüsselbund, zu verbinden. Ein Beschleunigungssensor aktiviert die Beleuchtungseinrichtung.

In der US 5,424,926 wird ein Handtaschenlicht behandelt. Dieses ist über Befestigungsvorrichtungen an der Innenseite der Tasche befestigt. Es wird entweder über einen manuellen Schalter oder über einen mit dem Schließmechanismus der Handtasche verbundenen Schaltmechanismus aktiviert.

Die DE 10 2008 026 571 A1 offenbart eine Vorrichtung zum Beleuchten eines tragbaren Behälters. Diese Vorrichtung ist fest an und/oder in einer Innenseite des tragbaren Behälters angeordnet. Aktiviert wir die Vorrichtung durch einen Bewegungsmelder.

Gegenstand der US 2006/0203473 A1 ist eine transportable Beleuchtungseinrichtung mit einem Spiegel. Der Spiegel befindet sich im Inneren eines aufklappbaren Gehäuses. Es ist vorgesehen, dass beim Öffnen des aufklappbaren Gehäuses Leuchtmittel aktiviert werden. Ein weiteres, an der Außenseite des Gehäuses angeordnetes Leuchtmittel kann über einen mechanischen Schalter aktiviert werden.

Aufgabe der Erfindung ist, eine Beleuchtungseinrichtung vorzuschlagen, die die oben genannten Nachteile nicht aufweist.

Diese Aufgabe wird durch eine Beleuchtungseinrichtung gemäß den Merkmalen des Anspruchs 1 gelöst.

Die erste Lichtquelle wird aktiviert, sobald ein Benutzer sich dem Gegenstand nähert oder ihn berührt. Hierdurch beleuchtet der Gegenstand seine Umgebung und wird erkennbar. Wenn der Gegenstand in einer Handtasche angeordnet ist und ein Benutzer in dieser nach etwas sucht, wird das Suchen, insbesondere die damit verbundene Bewegung erkannt und die erste Lichtquelle mit Energie versorgt. Hierdurch ist der öffenbare und wieder verschließbare Gegenstand sowohl selbst leicht erkennbar, als auch die ihn umgebenden Gegenstände.

Es kann vorgesehen sein, dass die Sensoreinheit ein zweites Sensormittel aufweist, das zumindest erkennt, ob der öffenbare und wieder verschließbare Gegenstand offen oder geschlossen ist, und dass eine zweite Schalteinheit von der Steuereinheit von einem offenen Schaltzustand in einen geschlossenen Schaltzustand überführt überführbar ist oder überführt wird, in welchem die erste Lichtquelle und/oder eine zweite Lichtquelle durch den elektrischen Energiespeicher mit elektrischer Energie versorgbar ist. Wird dann der öffenbare und wieder verschließbare Gegenstand von dem Benutzer geöffnet, wird die erste Lichtquelle und/oder die zweite Lichtquelle mit elektrischer Energie versorgt. Dieses ermöglicht es dem Benutzer einen Inhalt des öffenbaren und wieder verschließbaren Gegenstands zu erkennen. Wenn in dem Gegenstand ein Spiegel angeordnet ist, kann sich solchenfalls ein Benutzer auch bei Dunkelheit in diesem durch die erste und/oder zweite Lichtquelle erkennen.

Der öffenbare und wieder verschließbare Gegenstand ist aus zwei kalottenartigen Gehäuseteilen gebildet, die vorzugsweise mittels eines Gelenks auf- und zuklappbar sind.

Das zweite Sensormittel kann grundsätzlich beliebig ausgebildet sein und beispielsweise einen Berührkontakt umfassen, der getrennt wird, wenn der öffenbare und wieder verschließbare Gegenstand geöffnet wird, und der wieder geschlossen wird, wenn der öffenbare und wiederverschließbare Gegenstand geschlossen wird. Es erweist sich allerdings als vorteilhaft, wenn das zweite Sensormittel der Sensoreinheit einen Schalterdrücker und/oder einen Hall-Sensor und/oder einen Read-Kontakt umfasst. Solchenfalls lässt sich das Öffnen und Schließen des öffenbaren und wieder verschließbaren Gegenstands auf einfache Weise durch die Sensoreinheit feststellen. Grundsätzlich ist es denkbar, dass das erste Sensormittel der Sensoreinheit derart beliebig ausgebildet ist, dass es ein sich Nähern bzw. ein Berühren durch einen

Benutzer erfasst. Es erweist sich allerdings als vorteilhaft, wenn das erste Sensormittel der Sensoreinheit derart ausgebildet ist, dass es auch eine Änderung der Helligkeit erfassen kann und insbesondere einen Helligkeitssensor umfasst. Hierdurch ist ermöglicht, dass die Beleuchtungseinrichtung, beispielsweise wenn sie in einer Damenhandtasche angeordnet ist, erst dann aktiviert wird, wenn sie das Öffnen der Tasche durch eine damit verbundene Änderung der Helligkeit innerhalb der Tasche erfasst. Hierdurch lässt sich die im elektrischen Energiespeicher vorhandene Energie effizienter nutzen.

In Weiterbildung letztgenannten Erfindungsgedankens erweist es sich als vorteilhaft, wenn die Steuereinheit die erste Schalteinheit erst dann freigibt, wenn das erste Sensormittel der Sensoreinheit ein Unterschreiten einer Lichtstärke von 100 Lux, bevorzugt 80 Lux, bevorzugt 50 Lux, bevorzugt 40 Lux freigibt. Hierdurch ist gewährleistet, dass der Benutzer erst dann Unterstützung durch die Beleuchtungseinrichtung erfährt, wenn die vorherrschende Helligkeit die oben genannte Helligkeitswerte unterschreitet. Hierdurch lässt sich Effizienz der Nutzung der im Energiespeicher verfügbaren elektrischen Energie weiter steigern.

Bei einer weiteren Ausführungsform der Erfindung ist vorgesehen, dass das erste Sensormittel der Sensoreinheit funktional der ersten Lichtquelle und das zweite Sensormittel der Sensoreinheit funktional der zweiten Lichtquelle zugeordnet ist und dass die Steuereinheit derart ausgebildet ist, dass sie die erste Schalteinheit von einem geschlossenen Schaltzustand in einen offenen Schaltzustand überführt, wenn die zweite Schalteinheit von einem offenen Schaltzustand in einen geschlossenen Schaltzustand überführt wird.

Bevorzugt ist die erste Lichtquelle in dem öffenbaren und wieder verschließbaren Gegenstand derart angeordnet, dass sie an dessen Oberfläche oder durch dessen Oberfläche nach Außen scheint. Hingegen ist die zweite Lichtquelle derart in dem öffenbaren und wieder verschließbaren Gegenstand angeordnet, dass sie beim Öffnen des öffenbaren und wieder verschließbaren Gegenstands dessen Inhalt beleuchtet. Solchenfalls hat der Benutzer keine Verwendung mehr für das von der ersten Lichtquelle emittierte Licht. Durch das automatische Abschalten der ersten Lichtquelle, wenn die zweite Lichtquelle mit Energie versorgt wird, lässt sich die im elektrischen Energiespeicher gespeicherte Energie noch effizienter nutzen.

Darüber hinaus erweist es sich als vorteilhaft, wenn das zweite Sensormittel der Sensoreinheit einen Helligkeitssensor umfasst und wenn die Steuereinheit derart ausgebildet ist, dass sie die zweite Schalteinheit von einem geschlossenen Schaltzustand in einen offenen Schaltzustand überführt, wenn durch den Helligkeitssensor eine Helligkeit von mehr als 100 Lux, bevorzugt mehr als 80 Lux, bevorzugt mehr als 50 Lux, bevorzugt mehr als 40 Lux, erfasst wird. Solchenfalls wird Energie gespart, wenn das zweite Sensormittel der Sensoreinheit erfasst, dass die umgebende Helligkeit ausreichend ist, um den Inhalt des öffenbaren und wieder verschließbaren Gegenstands ohne zusätzliche Beleuchtung zu erkennen.

Bei einer Weiterbildung der Erfindung ist vorgesehen, dass das erste Sensormittel der Sensoreinheit ein Pyrosensor und/oder ein Kapazitivensensor und/oder ein Ultraschallsensor zum Erkennen einer Bewegung innerhalb des Gegenstands oder einer Berührung der Schaltervorrichtung umfasst. Hierdurch beginnt der Gegenstand zu leuchten, wenn ein Benutzer sich aktiv mit dem Gegenstand beschäftigt, beispielsweise, wenn der öffenbare und wieder verschließbare Gegenstand in eine Tasche reingelegt ist, der Benutzer in der Tasche etwas sucht.

Es erweist sich als vorteilhaft, wenn die Steuereinheit derart ausgebildet ist, dass die zweite Schalteinheit von dem geschlossenen Schaltzustand in den offenen Schaltzustand nach 5 bis 60 Sekunden insbesondere nach 10 bis 40 Sekunden, insbesondere nach 10 bis 30 Sekunden nach Erkennen eines Öffnens des öffenbaren und wieder verschließbaren Gegenstands durch das zweite Sensormittel der Sensoreinheit zurückführt und/oder dass die Steuereinheit derart ausgebildet ist, dass die erste Schalteinheit von dem geschlossenen Schaltzustand in den offenen Schaltzustand nach 5 bis 60 Sekunden, insbesondere nach 10 bis 40 Sekunden, insbesondere nach 15 bis 30 Sekunden nach Erfassen der letzten Bewegung durch das erste Sensormittel der Sensoreinheit zurückführt. Hierdurch ist eine Zeit einstellbar, nach der die zweite Lichtquelle automatisch ausgeschaltet wird. Dieses ist beispielsweise dann vorteilhaft, wenn ein Benutzer es vergessen hat, den öffenbaren und wieder verschließbaren Gegenstand nach einer Benutzung wieder zu verschließen.

Darüber hinaus erweist es sich als vorteilhaft, wenn die erste Lichtquelle und/oder die zweite Lichtquelle jeweils zumindest eine Glüchwendelampe, LED und/oder Leuchtfolie umfasst, insbesondere eine Mehrzahl an Glühwendellampen, LEDs und/oder Leuchtfolien umfasst.

Vorteilhafterweise umfasst die Gesamtleistung eines LEDs beziehungsweise der Gesamtheit aller LEDs 200 mW bis 300 mW. Hierdurch umfasst jede einzelne LED eine Lichtstärke von 600 mcd bis 2.200 mcd (milli-Candela).

Darüber hinaus erweist es sich als vorteilhaft, wenn die Beleuchtungseinrichtung ein durch die Steuereinheit ansteuerbaren Dimmer aufweist, mit dem die Energieversorgung der ersten Lichtquelle und/oder zweiten Lichtquelle abrupt oder kontinuierlich bis auf Null reduzierbar ist, insbesondere innerhalb von einer Sekunde bis zwei Minuten, insbesondere innerhalb von 1 Sekunde bis 90 Sekunden, insbesondere innerhalb von 10 Sekunden bis 60 Sekunden.

Es erweist sich als optisch besonders ansprechend, wenn der öffenbare und wieder verschließbare Gegenstand ein transparentes und/oder transluzentes und/oder opakes Material umfasst und dass die erste Lichtquelle und/oder die zweite Lichtquelle in das Material des öffenbaren und wieder verschließbaren Gegenstands innerhalb dieses Materials, und bevorzugt von diesem umgeben, angeordnet sind.

Darüber hinaus wird die Aufgabe durch eine erfindungsgemäße Beleuchtungseinrichtung gelöst, bei der das erste Sensormittel der Sensoreinheit einen kapazitiven Sensor umfasst.

Die Beleuchtungseinrichtung kann zusätzlich ein Anzeigeelement zum Anzeigen mindestens einer Information umfassen und/oder die erste Lichtquelle und/oder die zweite Lichtquelle ein Anzeigeelement zum Anzeigen mindestens einer Information bilden. Hierdurch ist die Einsetzbarkeit der Beleuchtungseinrichtung erhöht.

In Weiterbildung letztgenannten Erfindungsgedankens erweist es sich als vorteilhaft, wenn das Anzeigeelement über die erste Schalteinheit und/oder über die zweite Schalteinheit mit dem elektrischen Energiespeicher verbindbar ist und/oder wenn die mindestens eine Information eine Uhrzeit, ein Datum und/oder ein Signal, insbesondere akustisches Alarmsignal, umfasst.

Solchenfalls wird das Anzeigeelement bei Erfassen einer Bewegung und oder beim Berühren der Beleuchtungseinrichtung aktiviert. Wenn die Information eine Uhrzeit, ein Datum und/oder ein Signal umfasst, erfüllt die Beleuchtungseinrichtung die Funktion einer Uhr.

Ferner ist es denkbar, dass das Anzeigeelement ein akustisches, optisches und/oder haptisch wahrnehmbares Anzeigen der Information umfasst. Beispielsweise kann die Beleuchtungseinrichtung hierdurch als Radiogerät, Wiedergabegerät, insbesondere MP-3 Player, oder dergleichen Verwendung finden.

Darüber hinaus erweist es sich als zweckmäßig, wenn die Beleuchtungseinrichtung nach eine Datenspeichereinrichtung, die im oder am öffenbaren und wieder verschließbaren Gegenstand anordenbar oder angeordnet ist, umfasst und auf der mittels einer Schnittstelleneinheit mindestens einem Datum übertragbar und/oder speicherbar ist.

Schließlich erweist es sich als vorteilhaft, wenn der öffenbare und wieder verschließbare Gegenstand eine Behältniseinrichtung zum Anordnen mindestens eines Körperelements, wie Medikamente, Zahlungsmittel, Mittel zur Körper- und Schönheitspflege und/oder sonstige Gegenstände, bildet.

Besonderer Vorteil der erfindungsgemäßen Beleuchtungseinrichtung ist, dass sie, wenn sie beispielsweise in einer Tasche angeordnet ist, leicht auffindbar ist und die sie umgebenden Gegenstände erkennbar werden lässt.

Zudem wird eine Erkennen des Inhalts des öffenbaren und wieder verschließbaren Gegenstands wesentlich erleichtert.

Schließlich mutet mittels der Beleuchtungseinrichtung der öffenbare und wieder verschließbare Gegenstand besonders optisch ansprechend an.

Weitere Merkmale, Einzelheiten und Vorteile der Erfindung ergeben sich aus den beigefügten Patentansprüchen und der zeichnerischen Darstellungen nachfolgender Beschreibung zweier Ausführungsformen der Erfindung.

In der Zeichnung zeigen:
Figur 1 eine schematische Darstellung der erfindungsgemäßen Beleuchtungseinrichtung;
Figur 2 eine perspektivische Darstellung eines Kosmetikaccessoires mit einer erfindungsgemäßen Beleuchtungseinrichtung.

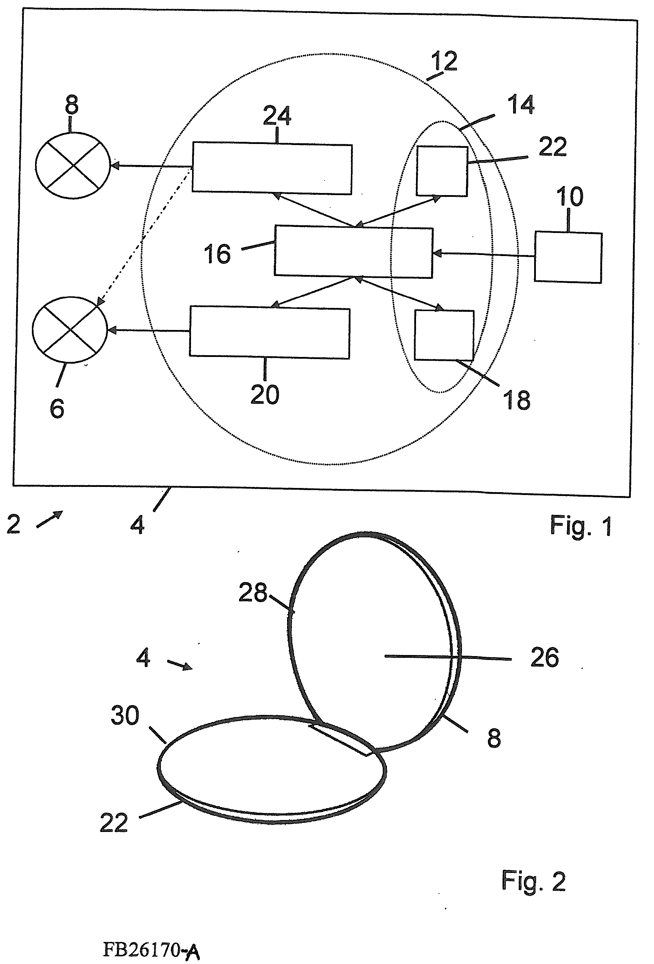

Figur 1 zeigt eine schematische Darstellung der insgesamt mit dem Bezugszeichen 2 versehenen Beleuchtungseinrichtung. Die Beleuchtungseinrichtung 2 ist in einem öffenbaren und wieder verschließbaren Gegenstand 4 angeordnet und umfasst bei dem in der Figur 1 dargestellten Ausführungsbeispiel eine erste Lichtquelle 6 und eine zweite Lichtquelle 8. Die erste Lichtquelle 6 sowie die zweite Lichtquelle 8 sind durch einen elektrischen Energiespeicher 10 mit elektrischer Energie versorgbar. Der ersten Lichtquelle 6 und der zweiten Lichtquelle 8 sowie dem elektrischen Energiespeicher 10 ist funktional eine Schaltervorrichtung 12 zwischengeschaltet die eine eine Sensoreinheit 14 umfassende Steuereinheit 16 aufweist, mit der bei Berühren eines ersten Sensormittels 18 der Sensoreinheit 14 und/oder bei Erfassen einer Annäherung eines Benutzers durch das erste Sensormittel 18 der Sensoreinheit 14 eine erste Schalteinheit 20 von einem offenen Schaltzustand in einen geschlossenen Schaltzustand überführbar ist, in welchem die erste Lichtquelle 6 durch den elektrischen Energiespeicher 10 mit elektrischer Energie versorgbar ist. Darüber hinaus umfasst die Sensoreinheit 14 ein zweites Sensormittel 22, das zumindest erkennt, ob der öffenbare und wieder verschließbare Gegenstand 4 offen oder geschlossen ist. Wenn das zweite Sensormittel 22 erkennt, dass der öffenbare und wieder verschließbare Gegenstand offen ist, wird durch die Steuereinheit 16 eine zweite Schalteinheit 24 derart ansteuert, dass die erste Lichtquelle 6 oder die zweite Lichtquelle 8 durch den Energiespeicher 10 mit elektrischer Energie versorgt wird.

Im Folgenden wird die Funktionsweise der erfindungsgemäßen Beleuchtungseinrichtung 2 geschildert:
Wenn sich ein Benutzer dem öffenbaren und wieder verschließbaren Gegenstand 4 nähert oder ihn berührt, wird dieses durch das erste Sensormittel 18 der Sensoreinheit 14 erfasst. Die Steuereinheit 16 steuert solchenfalls die erste Schalteinheit 20 derart an, dass diese in einen geschlossenen Schaltzustand überführt wird und die erste Lichtquelle 6 durch elektrische Energie versorgt wird und dadurch leuchtet.

Wenn der öffenbare und wieder verschließbare Gegenstand 4 geöffnet wird, wird dieses durch das zweite Sensormittel 22 der Sensoreinheit 14 erfasst. Solchenfalls wird die erste Lichtquelle 6 und/oder die zweite Lichtquelle 8 bestromt.

Figur 2 zeigt einen als Kosmetikaccessoire ausgebildeten öffenbaren und wieder verschließbaren Gegenstand 4, in dem eine Beleuchtungseinrichtung 2 angeordnet ist. Bei dem Kosmetikaccessoire kann es sich um einen aufklappbaren Schminkspiegel handeln. In Figur 2 weist dieser in der Bildebene oben eine reflektierende Oberfläche 26 auf. Um diese Oberfläche 26 herum ist die zweite Lichtquelle (8) angeordnet. Figur 2 zeigt den öffenbaren und wieder verschließbaren Gegenstand 4 in einer geöffneten Position. Die beiden den öffenbaren und wieder verschließbaren Gegenstand 4 bildenden kalottenartigen Teilkörper 28 und 30 nehmen bei dem gezeigten Ausführungsbeispiel einen rechten Winkel zueinander ein. Solchenfalls ist ein als magnetischer Schnappverschluss ausgebildetes zweites Sensormittel 22 getrennt, wodurch die zweite Lichtquelle 8 mit elektrischer Energie versorgt wird und den Inhalt des offenbaren und wieder verschließbaren Gegenstands 4 beleuchtet. Das hierdurch emittierte Licht hilft einem Benutzer sich beispielsweise in der reflektierenden Fläche 26 zu erkennen.

Beim Wiederverschließen des Gegenstands 4 wird die Energieversorgung der Lichtquelle 8 wieder unterbrochen.

Die in der vollständigen Beschreibung, in den Ansprüchen sowie in den Zeichnungen offenbarten Merkmale der Erfindung können sowohl einzeln als auch in jeder beliebigen Kombination für die Verwirklichung der Erfindungen in ihren verschiedenen Ausführungsformen wesentlich sein.

## Patentansprüche

1. Beleuchtungseinrichtung (2), die auch bei ihrem Transport in Betrieb nehmbar ist und in einem öffnenbaren und wieder verschließbaren Gegenstand (4) angeordnet ist, mit mindestens einer ersten Lichtquelle (6), einem elektrischen Energiespeicher (10) und einer Schaltervorrichtung (12), die eine eine Sensoreinheit (14) umfassende Steuereinheit (16) aufweist, mit der eine erste Schalteinheit (20) von einem offenen Schaltzustand in einen geschlossenen Schaltzustand überführbar ist oder überführt wird, in welchem die erste Lichtquelle (6) durch den elektrischen Energiespeicher (10) mit elektrischer Energie versorgbar ist oder versorgt wird, und wobei der öffnenbare und wieder verschließbare Gegenstand (4) ein transparentes und/oder transluzentes Material umfasst, und wobei die Beleuchtungseinrichtung (2) in einer Handtasche anordnenbar ist, und wobei die erste Lichtquelle (6) in dem öffnenbaren und wiederverschließbaren Gegenstand (4) angeordnet ist, wobei die erste Lichtquelle (6) an dessen Oberfläche oder durch dessen Oberfläche nach Außen scheint, und wobei
der öffnenbare und wieder verschließbare Gegenstand (4) aus zwei kalottenartigen Gehäuseteilen (28, 30) ausgebildet ist, **dadurch gekennzeichnet, dass** die Überführung der ersten Schalteinheit (20) von dem offenen Schaltzustand in den geschlossenen Schaltzustand bei Berühren eines ersten Sensormittels (18) der Sensoreinheit (14) oder Erfassen einer Annäherung eines Benutzers durch ein erstes Sensormittel (18) erfolgt.

2. Beleuchtungseinrichtung (2) nach Anspruch 1, **dadurch gekennzeichnet, dass** die Steuereinheit (16) derart ausgebildet ist, dass sie die erste Schalteinheit (20) von dem geschlossenen Schaltzustand in den offenen Schaltzustand nach 5 bis 60 Sekunden nach Erfassen der letzten Bewegung durch das erste Sensormittel (18) der Sensoreinheit (14) zurückführt.

3. Beleuchtungseinrichtung (2) nach einem der Ansprüche 1 oder 2, **dadurch gekennzeichnet, dass**
das erste Sensormittel (18) einen Helligkeitssensor umfasst, wobei insbesondere die erste Schalteinheit (20) von einem offenen Schaltzustand in einen geschlossenen Schaltzustand überführbar ist oder überführt wird, wenn durch den Helligkeitssensor eine Helligkeit von mehr als 100 Lux, insbesondere mehr als 80 Lux, insbesondere mehr als 50 Lux, bevorzugt mehr als 40 Lux erfasst wird.

4. Beleuchtungseinrichtung (2) nach einem der vorangehenden Ansprüche, **dadurch gekennzeichnet, dass** die erste Lichtquelle (6) innerhalb des transparenten und/oder transluzenten Materials des öffnenbaren und wieder verschließbaren Gegenstands (4), und bevorzugt von diesem umgeben, angeordnet ist.

5. Beleuchtungseinrichtung (2) nach einem der vorangehenden Ansprüche, **dadurch gekennzeichnet, dass**
das erste Sensormittel (18) der Sensoreinheit (14) einen Pyrosensor und/oder einen kapazitiven Sensor und/oder einen Ultraschallsensor zum Erkennen einer Annäherung eines Benutzers und/oder zum Erkennen einer Berührung der Schaltervorrichtung (12) umfasst.

6. Beleuchtungseinrichtung (2) nach einem der vorangehenden Ansprüche, **dadurch gekennzeichnet, dass**
die Steuereinheit (16) derart ausgebildet ist, dass sie die erste Schalteinheit (20) von dem geschlossenen Schaltzustand in den offenen Schaltzustand nach 10 bis 40 Sekunden, insbesondere nach 15 bis 30 Sekunden nach Erfassen der letzten Bewegung durch das erste Sensormittel (18) der Sensoreinheit (14) zurückführt.

7. Beleuchtungseinrichtung (2) nach einem der vorangehenden Ansprüche, **dadurch gekennzeichnet, dass**
die erste Lichtquelle (6) zumindest eine Glühwendellampe, LED und/oder Leuchtfolie umfasst, insbesondere eine Mehrzahl an Glühwendellampen, LED und/oder Leuchtfolien umfasst.

8. Beleuchtungseinrichtung (2) nach einem der vorangehenden Ansprüche,
**gekennzeichnet durch**
einen **durch** die Steuereinheit (16) ansteuerbaren Dimmer aufweist, mit dem die Energieversorgung der ersten Lichtquelle (6) abrupt oder kontinuierlich bis auf 0 reduzierbar ist, insbesondere innerhalb von einer Sekunde bis 2 Minuten, insbesondere innerhalb von 10 Sekunden bis 90 Sekunden, insbesondere innerhalb von 10 Sekunden bis 60 Sekunden.

9. Beleuchtungseinrichtung (2) nach einem der vorangehenden Ansprüche,
**gekennzeichnet durch**
ein Anzeigeelement zum Anzeigen mindestens einer Information und/oder dadurch dass die erste Lichtquelle (6) und/oder die zweite Lichtquelle (8) ein Anzeigeelement zum Anzeigen mindestens einer Information bilden.

10. Beleuchtungseinrichtung (2) nach einem der vorangehenden Ansprüche,
**gekennzeichnet durch**
eine Datenspeichereinrichtung, die im oder am öffnenbaren und wieder verschließbaren Gegenstand anordenbar oder angeordnet ist und auf der mittels einer Schnittstelleneinheit mindestens einem Datum übertragbar und/oder speicherbar ist.

11. Beleuchtungseinrichtung (2) nach einem der vorangehenden Ansprüche, **dadurch gekennzeichnet, dass**
der öffnenbare und wieder verschließbare Gegenstand (4) eine Behältniseinrichtung zum Anordnen mindestens eines Körperelements, wie Medikamente, Zahlungsmittel, Mittel zur Körper- und Schönheitspflege und/oder sonstige Gegenstände, bildet.

12. Beleuchtungseinrichtung (2) nach einem der vorangehenden Ansprüche, **dadurch gekennzeichnet, dass**
der öffnenbare und wiederverschließbare Gegenstand (4) in Form eines Kosmetikspiegels ausgebildet ist.

## Claims

1. An illuminating device (2), which can also be operated when transported and is arranged in an openable and reclosable object (4), comprising at least one first light source (6), an electric power storage unit (10) and a switch device (12), which comprises a control unit (16) comprising a sensor unit (14), by means of which a first switching unit (20) can be brought or is brought from an open switching state into a closed switching state, in which the first light source (6) can be supplied or is supplied with electric power by the electric power source (10), and wherein the openable and reclosable object (4) comprises a transparent and/or translucent material, and wherein the illuminating device (2) can be arranged in a handbag and wherein the first light source (6) is arranged in the openable and reclosable object (4), wherein the first light source (6) shines outwards on its surface or through its surface, and wherein the openable and reclosable object (4) is formed by two cap-shaped housing parts (28, 30), **characterised in that** the transfer of the first switching unit (20) from the open switching state to the closed switching state is performed on contacting a first sensor means (18) of the sensor unit (14) or detecting the approach of a user by a first sensor means (18).

2. The illuminating device (2) according to claim 1, **characterised in that** the control unit (16) is designed such that it returns the first switching unit (20) from the closed switching state to the open switching state 5 to 60 seconds after the first sensor means (18) of the sensor unit (14) detects the last movement.

3. The illuminating device (2) according to any one of claims 1 or 2, **characterised in that** the first sensor means (18) comprises a brightness sensor, wherein in particular the first switching unit (20) can be brought or is brought from an open switching state to a closed switching state if the brightness sensor detects a brightness of more than 100 Lux, in particular more than 80 Lux, in particular more than 50 Lux, preferably more than 40 Lux.

4. The illuminating device (2) according to any one of the preceding claims, **characterised in that**
the first light source (6) is arranged within the transparent and/or translucent material of the openable and reclosable object (4) and is preferably surrounded by the latter.

5. The illuminating device (2) according to any one of the preceding claims, **characterised in that**
the first sensor means (18) of the sensor unit (14) comprises a pyrosensor and/or a capacitive sensor and/or an ultrasound sensor for recognising the approach of a user and/or for recognising contact with the switch device (12).

6. The illuminating device (2) according to any one of the preceding claims, **characterised in that**
the control unit (16) is designed such that it returns the first switching unit (20) from the closed switching state to the open switching state after 10 to 40 seconds, in particular after 15 to 30 seconds, after the first sensor means (18) of the sensor unit (14) detects the last movement.

7. The illuminating device (2) according to any one of the preceding claims, **characterised in that**
the first light source (6) comprises at least one filament lamp, LED and/or luminous film, in particular a plurality of filament lamps, LEDs and/or luminous films.

8. The illuminating device (2) according to any one of the preceding claims, **characterised by**
a dimmer which can be controlled by the control unit (16), by means of which the power supply to the first light source (6) can be reduced abruptly or continually to 0, in particular within one second to 2 minutes, in particular within 10 seconds to 90 seconds, in particular within 10 seconds to 60 seconds.

9. The illuminating device (2) according to any one of the preceding claims, **characterised by**
a display element for displaying at least one piece of information and/or in that the first light source (6) and/or the second light source (8) form a display element for displaying at least one piece of information.

10. The illuminating device (2) according to any one of the preceding claims, **characterised by**
a data storage device, which can be arranged or is arranged in or on the openable and reclosable object and on which at least one datum can be transferred and/or stored by means of an interface unit.

11. The illuminating device (2) according to any one of the preceding claims, **characterised in that**
the openable and reclosable object (4) forms a container device for arranging at least one body element, such as medication, means of payment, personal hygiene and beauty care products and/or other objects.

12. The illuminating device (2) according to any one of the preceding claims, **characterised in that**
the openable and reclosable object (4) is designed in the form of a cosmetic mirror.

## Revendications

1. Dispositif d'éclairage (2), lequel peut également être mis en service lors de son transport et est disposé dans un objet ouvrable et refermable (4), avec au moins une première source lumineuse (6), un accumulateur d'énergie électrique (10) et un dispositif de commutation (12), lequel présente une unité de commande (16) comprenant une unité de détection (14), avec laquelle une première unité de commutation (20) peut passer ou passe d'un état de commutation ouvert à un état de commutation fermé, dans lequel la première source lumineuse (6) est alimentable ou alimentée en énergie électrique par l'accumulateur d'énergie électrique (10), et l'objet (4) ouvrable et refermable comprenant un matériau transparent et/ou translucide, et le dispositif d'éclairage (2) étant disposable dans un sac à main, et la première source lumineuse (6) étant disposée dans l'objet ouvrable et refermable (4), la première source lumineuse (6) rayonnant vers l'extérieur à sa surface ou à travers sa surface, et l'objet ouvrable et refermable (4) étant formé de deux pièces de boîtier en forme de calottes (28, 30),
**caractérisé en ce que** le passage de la première unité de commande (20) de l'état de commutation ouvert à l'état de commutation fermé est effectué par le contact d'un premier moyen de détection (18) de l'unité de détection (14) ou par la détection de l'approche d'un utilisateur par un premier moyen de détection (18).

2. Dispositif d'éclairage (2) selon la revendication 1, **caractérisé en ce que** l'unité de commande (16) est formée de telle sorte qu'elle refait passer la première unité de commande (20) de l'état de commutation fermé à l'état de commutation ouvert après 5 à 60 secondes après détection du dernier mouvement par le premier moyen de détection (18) de l'unité de détection (14).

3. Dispositif d'éclairage (2) selon l'une des revendications 1 ou 2,
**caractérisé en ce que**
le premier moyen de détection (18) comprend un capteur de luminosité, la première unité de commutation (20), en particulier, pouvant passer ou passant d'un état de commutation ouvert à un état de commutation fermé lorsqu'une luminosité supérieure à 100 lux, en particulier supérieure à 80 lux, en particulier supérieure à 50 lux, de préférence supérieure à 40 lux est détectée par le capteur de luminosité.

4. Dispositif d'éclairage (2) selon l'une des revendications précédentes,
**caractérisé en ce que**
la première source lumineuse (6) est disposée à l'intérieur du matériau transparent et/ou translucide de l'objet ouvrable et refermable (4), et de préférence entourée par celui-ci.

5. Dispositif d'éclairage (2) selon l'une des revendications précédentes,
**caractérisé en ce que**
le premier moyen de détection (18) de l'unité de détection (14) comprend un détecteur pyroélectrique et/ou un détecteur capacitif et/ou un détecteur d'ultrasons pour la détection de l'approche d'un utilisateur et/ou pour la détection d'un toucher du dispositif de commutation (12).

6. Dispositif d'éclairage (2) selon l'une des revendications précédentes,
**caractérisé en ce que**
l'unité de commande (16) est formée de telle sorte qu'elle refait passer la première unité de commande (20) de l'état de commutation fermé à l'état de commutation ouvert après 10 à 40 secondes, en particulier après 15 à 30 secondes après détection du dernier mouvement par le premier moyen de détection (18) de l'unité de détection (14).

7. Dispositif d'éclairage (2) selon l'une des revendications précédentes,
**caractérisé en ce que**
la première source lumineuse (6) comprend au moins une lampe à filament incandescent, une LED et/ou une feuille lumineuse, en particulier une pluralité de lampes à filament incandescent, de LED et/ou de feuilles lumineuses.

8. Dispositif d'éclairage (2) selon l'une des revendications précédentes,
**caractérisé par**
un variateur commandable par l'unité de commande (16) avec lequel l'approvisionnement énergétique de la première source lumineuse (6) peut être diminué de façon abrupte ou en continu jusqu'à 0 dans un intervalle d'une seconde à 2 minutes, en particulier dans un intervalle de 10 secondes à 90 secondes, en particulier dans un intervalle de 10 secondes à 60 secondes.

9. Dispositif d'éclairage (2) selon l'une des revendications précédentes,
**caractérisé par**
un élément d'affichage pour l'affichage d'au moins une information et/ou en ce que la première source lumineuse (6) et/ou la deuxième source lumineuse (8) forment un élément d'affichage pour l'affichage d'au moins une information.

10. Dispositif d'éclairage (2) selon l'une des revendications précédentes,
**caractérisé par**
un dispositif de stockage de données pouvant être disposé ou étant disposé dans l'objet ouvrable et refermable et sur lequel au moins une date peut être transférée et/ou stockée à l'aide d'une unité d'interface.

11. Dispositif d'éclairage (2) selon l'une des revendications précédentes,
**caractérisé en ce que**
l'objet ouvrable et refermable (4) forme un dispositif de récipient pour la disposition d'au moins un élément corporel, tel que des médicaments, des moyens de payement, des moyens pour les soins du corps et les soins cosmétiques et/ou d'autres objets.

12. Dispositif d'éclairage (2) selon l'une des revendications précédentes,
**caractérisé en ce que**
l'objet ouvrable et refermable (4) est formé en forme de miroir de maquillage.
